# EUROPEAN PATENT APPLICATION

(11) **EP 2 693 317 A1**
(43) Date of publication of application: **05.02.2014**
(21) Application number: 12179316.0
(22) Date of filing: 03.08.2012
(51) Int. Cl.: G06F 3/048, G06F 3/0488

(54) **Electronic device and method of changing a keyboard**

(30) Priority: 01.08.2012 US 201213564474
(71) Applicant: BlackBerry Limited, Waterloo, ON N2K 0A7 (CA)
(72) Inventor: Haliburton, James George, Redwood City, CA California 94065 (US); Huang, Joseph Jyh-Huei, Menlo Park, California 94025 (US); Borg, Carl Magnus, Redwood City, CA California 94065 (US)
(74) Representative: Fennell, Gareth Charles

(57) **Abstract**

A method includes, on a display of an electronic device, displaying a first virtual keyboard of a set of available virtual keyboards, detecting a touch, when the touch is associated with a keyboard changing function, displaying previews of virtual keyboards of the set of available virtual keyboards, detecting selection of a second virtual keyboard of the set of available virtual keyboards, and displaying the second virtual keyboard in response to detecting the selection.

## Description

### FIELD OF TECHNOLOGY

The present disclosure relates to electronic devices including, but not limited to, portable electronic devices having a virtual keyboard.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones (smart phones), Personal Digital Assistants (PDAs), tablet computers, and laptop computers, with wireless network communications or near-field communications connectivity such as Bluetooth^{®} capabilities.

Portable electronic devices such as PDAs, or tablet computers are generally intended for handheld use and ease of portability. Smaller devices are generally desirable for portability. A touch-sensitive display, also known as a touchscreen display, is particularly useful on handheld devices, which are small and may have limited space for user input and output. The information displayed on the display may be modified depending on the functions and operations being performed.

### SUMMARY

A method includes, on a display of an electronic device, displaying a first virtual keyboard of a set of available virtual keyboards, detecting a touch, when the touch is associated with a keyboard changing function, displaying previews of virtual keyboards of the set of available virtual keyboards, detecting selection of a second virtual keyboard of the set of available virtual keyboards, and displaying the second virtual keyboard in response to detecting the selection.

An electronic device includes a touch-sensitive display and at least one processor coupled to the touch-sensitive display and configured to display a first virtual keyboard of a set of available virtual keyboards, detect a touch, when the touch is associated with a keyboard changing function, display at least two images providing previews of virtual keyboards of the set of available virtual keyboards, detect selection of a second virtual keyboard of the set of available virtual keyboards, and display the second virtual keyboard in response to detecting the selection.

### BRIEF DESCRIPTION OF THE DRAWINGS

Embodiments of the present disclosure will now be described, by way of example only, with reference to the attached figures, wherein:

FIG. 1 is a block diagram of a portable electronic device in accordance with an example;

FIG. 2 is a schematic view of an electronic device and a graphical prism in accordance with an example;

FIG. 3 is a flowchart illustrating an example of a method of changing a virtual keyboard displayed on an electronic device; and

FIG. 4A through FIG. 6C are views illustrating examples of changing a virtual keyboard displayed on an electronic device in accordance with the method of FIG. 3.

### DETAILED DESCRIPTION

The following describes an electronic device and method including, on a display of an electronic device, displaying a first virtual keyboard of a set of available virtual keyboards, detecting a touch, when the touch is associated with a keyboard changing function, displaying previews of virtual keyboards of the set of available virtual keyboards, detecting selection of a second virtual keyboard of the set of available virtual keyboards and displaying the second virtual keyboard in response to detecting the selection.

For simplicity and clarity of illustration, reference numerals may be repeated among the figures to indicate corresponding or analogous elements. Numerous details are set forth to provide an understanding of the examples described herein. The examples may be practiced without these details. In other instances, well-known methods, procedures, and components are not described in detail to avoid obscuring the examples described. The description is not to be considered as limited to the scope of the examples described herein.

The disclosure generally relates to an electronic device, such as a portable electronic device as described herein. Examples of electronic devices include mobile, or handheld, wireless communication devices such as pagers, cellular phones, cellular smart-phones, wireless organizers, personal digital assistants, wirelessly enabled notebook computers, tablet computers, mobile internet devices, electronic navigation devices, and so forth. The portable electronic device may also be a portable electronic device without wireless communication capabilities, such as a handheld electronic game device, digital photograph album, digital camera, media player, e-book reader, and so forth.

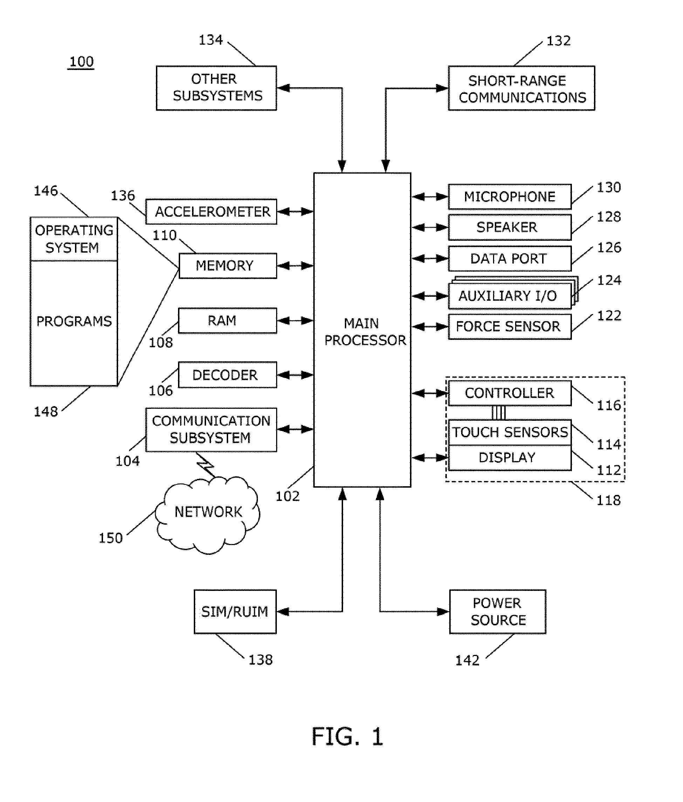

A block diagram of an example of a portable electronic device 100, also referred to as an electronic device 100 or a device 100, is shown in FIG. 1. The electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as a Random Access Memory (RAM) 108, memory 110, a touch-sensitive display 118, an auxiliary input/output (I/O) subsystem 124, a data port 126, a speaker 128, a microphone 130, short-range communications 132 and other device subsystems 134. The touch-sensitive display 118 includes a display 112 and touch sensors 114 that are coupled to at least one controller 116 utilized to interact with the processor 102. Input via a graphical user interface is provided via the touch-sensitive display 118. Information, such as text, characters, symbols, images, icons, and other items that may be displayed or rendered on a portable electronic device, is displayed on the touch-sensitive display 118 via the processor 102. Optionally, the processor may interact with one or more force sensors 122.

To identify a subscriber for network access, the portable electronic device 100 may utilize a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs, applications, or components 148 that are executed by the processor 102 and are typically stored in a persistent, updatable store such as the memory 110. Additional applications or programs may be loaded onto the portable electronic device 1 00 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing. The processor 102 may also interact with an accelerometer 136 to detect direction of gravitational forces or gravity-induced reaction forces that may determine the tilt of the portable electronic device 100.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth. A capacitive touch-sensitive display includes one or more capacitive touch sensors 114. The capacitive touch sensors may comprise any suitable material, such as indium tin oxide (ITO).

One or more touches, also known as touch contacts or touch events, may be detected by the touch-sensitive display 118. The processor 102 may determine attributes of the touch, including a location of the touch. Touch location data may include data for an area of contact or data for a single point of contact, such as a point at or near a center of the area of contact. The location of a detected touch may include x and y components, e.g., horizontal and vertical components, respectively, with respect to one's view of the touch-sensitive display 118. A touch may be detected from any suitable input member, such as a finger, thumb, appendage, or other objects, for example, a stylus, pen, or other pointer, depending on the nature of the touch-sensitive display 118. Multiple simultaneous touches may be detected.

One or more gestures may also be detected by the touch-sensitive display 118. A gesture, such as a swipe, also known as a flick, is a particular type of touch on a touch-sensitive display 118 and may begin at an origin point and continue to an end point, for example, a concluding end of the gesture. A gesture may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture. A gesture may also include a hover. A hover may be a touch at generally unchanged location over a period of time or a touch associated with the same selection item for a period of time.

Optional force sensors 122 may be disposed in conjunction with the touch-sensitive display 118 to determine or react to forces applied to the touch-sensitive display 118. The force sensors 122 may be force-sensitive resistors, strain gauges, piezoelectric or piezoresistive devices, pressure sensors, quantum tunneling composites, force-sensitive switches, or other suitable devices. Force as utilized throughout the specification, including the claims, refers to force measurements, estimates, and/or calculations, such as pressure, deformation, stress, strain, force density, force-area relationships, thrust, torque, and other effects that include force or related quantities. Optionally, force information associated with a detected touch may be utilized to select information, such as information associated with a location of a touch. For example, a touch that does not meet a force threshold may highlight a selection option, whereas a touch that meets a force threshold may select or input that selection option. Selection options include, for example, displayed or virtual keys of a keyboard; selection boxes or windows, e.g., "cancel," "delete," or "unlock"; function buttons, such as play or stop on a music player; and so forth. Different magnitudes of force may be associated with different functions or input. For example, a lesser force may result in panning, and a higher force may result in zoom ing.

Virtual keyboards may be displayed on the touch-sensitive display of an electronic device. The virtual keyboards are selectable and are displayed based on a selection. Each of the virtual keyboards may include a set of keys that are associated with characters. The characters associated with the keys of one of the virtual keyboards differs from the characters associated with the keys of the other virtual keyboards such that each of the virtual keyboards includes keys that are associated with different characters. For example, each virtual keyboard may include keys of a character set associated with a language such that the virtual keyboards are associated with various languages, such as English, French, Greek, Arabic, Chinese, Korean, and so forth. Other virtual keyboards may be associated with other character sets, symbols, or emoticons. Still other virtual keyboards may include a gesture pad, or area to accept stroke input or gesture input. A gesture pad is a designated area or region of the virtual keyboard that facilitates user input of characters associated with a script language, such as Chinese, through the use of gestures or strokes at a location associated with the gesture pad. A virtual keyboard may be displayed in landscape or portrait orientation.

Known methods of changing a virtual keyboard may be cumbersome, requiring menu navigation and interaction. Multi-lingual users that utilize two or use more virtual keyboards, may experience such difficulties when frequently switching between two virtual keyboards, e.g., switching between a keyboard including keys associated with English characters and a keyboard including keys associated with Chinese characters. Using a keyboard toggle button may require multiple touches to change the virtual keyboard. For example, a touch on a location associated with the keyboard toggle button may present a pop-up dialog with a plain text list of language options, and a subsequent touch or touches may be required at a location associated with one of the languages from the plain text list. For example, a working professional in South Korea may compose a work related e-mail message to a colleague in English and then compose a non-work related e-mail message to a friend in Korean. In this example, switching from a keyboard including keys associated with English characters to a keyboard including keys associated with Korean characters, and then back to the keyboard including keys associated with English characters may require multiple touches in total, including multiple touches to switch from one virtual keyboard to another and multiple touches to switch back.

Furthermore, utilizing a keyboard toggle button may open a pop-up dialog that is separate or disconnected from the location associated with the virtual keyboard, where the toggle interaction is initiated As well, methods for managing (adding or removing) virtual keyboards may be cumbersome. For example, a settings menu may be utilized in a typical device to add or remove virtual keyboards from a list of language options.

Furthermore, a list of language options presented in plain text may not permit a preview of the virtual keyboard corresponding to the desired language prior to selection. In particular, some languages have several virtual keyboard options that may not be readily described in a plain text list, causing difficulty in selecting a keyboard. For example, Chinese characters may be entered using one of several possible virtual keyboards, such as a virtual keyboard for the pinyin system, or alternatively a virtual keyboard that includes a gesture pad. Further, other character sets, such as symbols, numbers, or emoticons, are not may not be identifiable based on an entry in a list of language options because the particular symbols, numbers, or emoticons, for example, may not be readily identified by a title in a list.

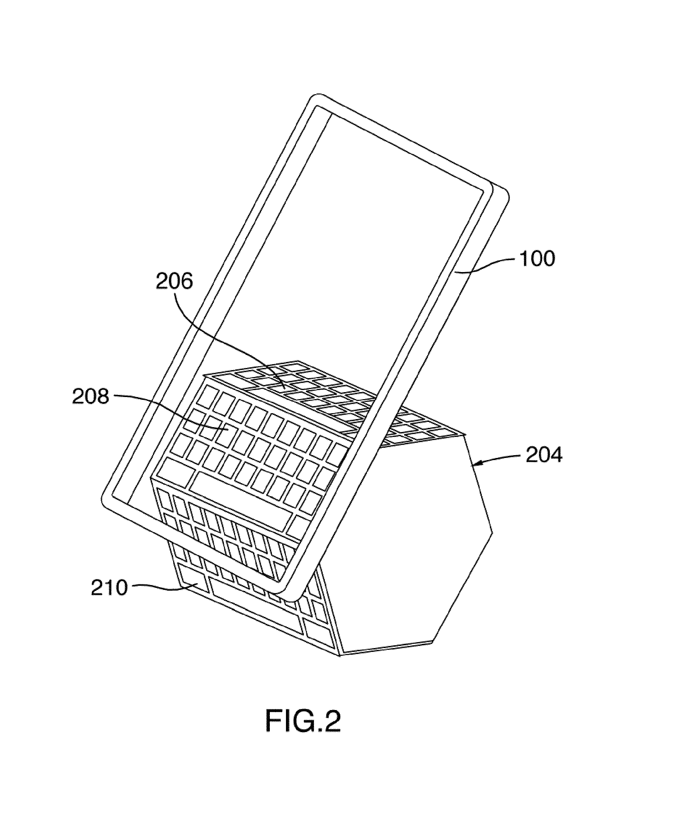

Advantageously, the changing or toggling of a virtual keyboard may be facilitated by displaying a plurality of previews, which may be images of virtual keyboards. For example, rather than a two-dimensional plain text list of language options, keyboard options may be displayed for selection utilizing mobile graphical processing power to illustrate three-dimensional keyboards, as illustrated in FIG. 2. According to this example, each image of a virtual keyboard may be displayed on one of a plurality of virtual surfaces 206, 208, 210 of a virtual three-dimensional graphical carousel, such as an n-sided graphical prism 204 that may be manipulated by the user. The displayed images may be changed by simulating a movement of the graphical carousel in response to detecting a gesture associated with the graphical carousel. The graphical prism 204 may be changed, for example, by adding surfaces or removing surfaces to illustrate one or many virtual keyboards. In the example of FIG. 2, an image of an Arabic language virtual keyboard may be previewed on the surface 206, an image of an English language virtual keyboard may be previewed on the surface 208, and an image of a Chinese language virtual keyboard may be previewed on the surface 210, to facilitate user selection and changing of the virtual keyboard.

Each surface of a three-dimensional graphical carousel may be associated with an image of an optional virtual keyboard. The user may gesture on the touch-sensitive display 118, to cause the graphical carousel to simulate rotation and display other surfaces of the graphical carousel to facilitate changing the virtual keyboard. All surfaces of the graphical carousel may not be displayed at once. During rotation of the graphical carousel, surfaces may be displayed or hidden depending on the configuration of the graphical carousel that is used.

Various configurations of the graphical carousel may be used. In the example of FIG. 2, the graphical carousel is a graphical prism including a plurality of surfaces, each of the surfaces including an image of a respective keyboard. The displayed images are changed by simulating a rotation of the prism, in response to detecting a gesture associated with the prism.

According to another example, the graphical carousel may be a graphical stack of surfaces each including an image of a respective keyboard. The displayed images are changed by simulating flipping through the graphical stack of surfaces, in response to detecting a gesture associated with the stack.

According to another example, the graphical carousel may be a graphical cylinder including surfaces arranged around the cylinder and each of the surfaces includes an image of a respective keyboard. The displayed images are changed by simulating a spinning of the cylinder, in response to detecting a gesture associated with the cylinder.

According to another example, the graphical carousel may be a graphical band (or film strip) including surfaces arranged in a column or row and each of the surfaces includes an image of a respective keyboard. The displayed images are changed by simulating an advancing of the band, in response to detecting a gesture associated with the band.

According to another example, the graphical carousel may be a graphical book that includes surfaces arranged as pages of the book. Each of the pages of the book includes an image of a respective keyboard. The displayed images are changed by simulating flipping the pages of the book, in response to detecting a gesture associated with the book.

According to another example, the graphical carousel may include a foreground surface or surfaces and a background surface or surfaces and each of the surfaces includes an image of a respective keyboard. The displayed images are changed by simulating the movement of surfaces from the background to the foreground, in response to detecting a gesture associated with the surfaces. The images that are not displayed at the foreground may be dimmed or faded out of view during changing of the images or after selection, for example.

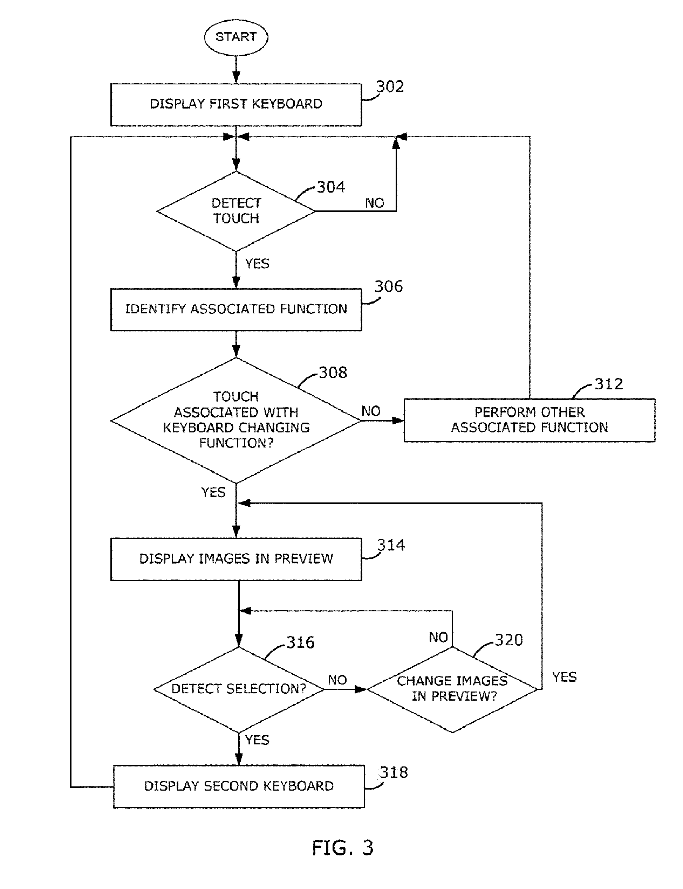

A flowchart illustrating an example of a method of changing a virtual keyboard displayed on an electronic device, such as the electronic device 100, is shown in FIG. 3. The method may be carried out by software executed, for example, by the processor 102 and/or the controller 116. Coding of software for carrying out such a method is within the scope of a person of ordinary skill in the art given the present description. The method may contain additional or fewer processes than shown and/or described, and may be performed in a different order. Computer-readable code executable by at least one controller or processor of the portable electronic device to perform the method may be stored in a computer-readable storage medium, which storage medium is a non-transitory computer-readable medium.

A keyboard is displayed on the touch-sensitive display 118 at 302. The keyboard may be any suitable keyboard such as a QWERTY keyboard, QWERTZ keyboard, AZERTY keyboard, and so forth. The keyboard may include a plurality of keys that are associated with characters that may be entered utilizing the keyboard. Alternatively, the keyboard may include a gesture pad with associated user elements to accept stroke or gesture input. The keyboard may be displayed in any suitable application. For example, the keyboard may be displayed for composition of a message in a messaging application. The keyboard may be displayed for entry of information in a data entry field in a Web browser application. The keyboard may be displayed for entry of information in other applications, such as a calendar application, a contacts or address book application, a word processing application, or any other suitable application.

When a touch is detected on the device at 304, the attributes of the touch are determined. The touch may be a multi-touch, a tap or touch of a duration less than a first threshold time, a gesture such as a swipe, a hover or touch of a duration greater than a second threshold, or the like. The attributes of the touch may include, for example, duration of the touch, number of touches or touch contacts, direction of the touch when the touch is a gesture, and so forth. The touch may include a hover including two locations of touch contact. The touch may include a multi-touch gesture.

The first touch may be associated with a function and the function is identified at 306 of FIG. 3. The function associated with the first touch may be dependent on the attributes of the first touch. For example, a first touch, such as a horizontal or vertical gesture, may be associated with a keyboard changing function to change the virtual keyboard. A touch on a location associated with one of the keys of the virtual keyboard may be associated with entry of the character associated with the one of the keys. A gesture, such as a swipe from a location on the keyboard, in the downward direction, may be associated with a function to hide the keyboard.

When the first touch is associated with a keyboard changing function at 308, the process continues at 310. The keyboard changing function is a function to facilitate changing the display of a first virtual keyboard to a second virtual keyboard. For example, in response to the first touch, the keyboard changing function may display a plurality of images in preview at 314. Ready identification of the gesture to change the keyboard may be facilitated by graphically animating the display of the images. Following the display of the images in preview at 314, the process continues at 316.

When selection of a second virtual keyboard is detected at 316, the second virtual keyboard is displayed. The virtual keyboard is displayed at 318. Thus, the virtual keyboard displayed at 302 is changed to the virtual keyboard displayed at 318. Selection of a second virtual keyboard may be detected upon detecting a touch at a location associated with one of the images, or upon exiting the keyboard changing function. Alternatively, selection may be detected upon detecting the end of the first touch, for example, detection of the end of the swipe.

When a keyboard selection is not detected at 316, the images in preview may be changed at 320, in response to detecting a gesture associated with the images in preview. A gesture associated with the images in preview may include a swipe or a continued first touch, for example, a continued swipe. In the example of the continued swipe, a swipe of a first length may display the image in preview and select a second keyboard. A swipe of second length that is longer than the first length, may display the image in preview, may change the previewed images, and result in selection of a third keyboard. Changing the images in preview facilitates selection of a keyboard associated with one of the images. As described above, changing the images in preview may be achieved by simulating a rotation of a graphical prism or other graphical carousel, in response to detecting a gesture associated with the graphical prism or graphical carousel, for example.

When the first touch is not associated with a keyboard changing function at 308, the process continues at 312 and a function associated with the first touch is performed. This function may be a function other than a keyboard changing function such as, for example a function for character entry, to show or hide the keyboard, or any other suitable function that may be associated with a touch.

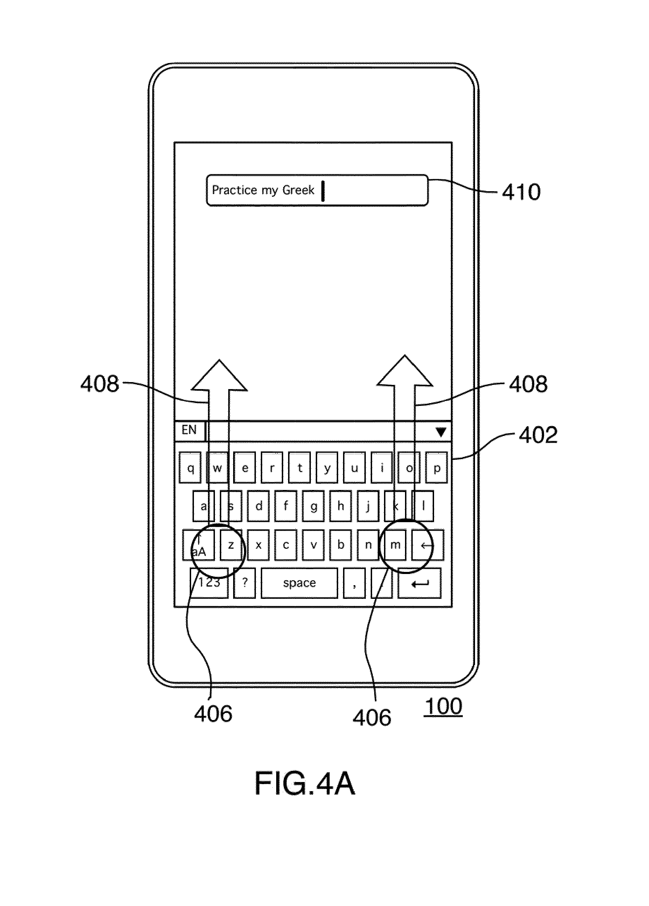

Examples of changing a virtual keyboard displayed on an electronic device 100 are illustrated in FIG. 4A through FIG. 6C and described with continued reference to FIG. 3. In the front view of FIG. 4A, an active virtual keyboard 402, an English language keyboard in this example, is displayed on the touch-sensitive display 118 at 302. The active virtual keyboard 402 is utilized to enter text into the entry field 410. A first touch, in this example, a two-finger swipe upwardly, as illustrated by the circles 406 and arrows 408, is detected at 304. The associated function is identified at 308. The associated function is a keyboard changing function at 308 and images in preview are displayed at 314.

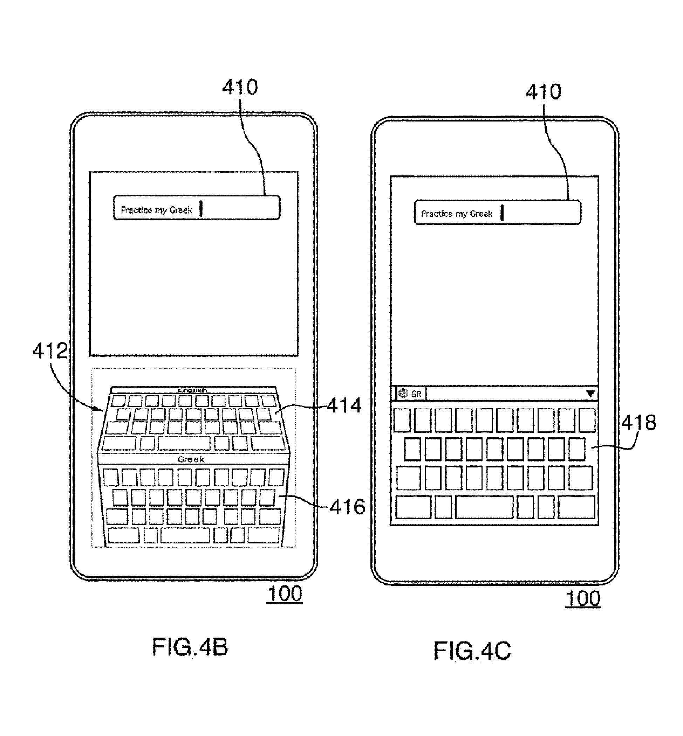

The images in preview are shown in FIG. 4B. The images in preview are displayed on virtual surfaces of a graphical prism 412 at 314. As the two-finger swipe moves upwardly on the touch-sensitive display 118, the graphical prism is rotated to change the images previewed at 320. Selection of a second virtual keyboard 416 (Greek language) may be detected when the two-finger swipe detected at 304 ends. In this example, the swipe is in the upward direction and an adjacent virtual keyboard is selected. The adjacent keyboard is the keyboard that is displayed on a virtual surface that is adjoined to the virtual surface of the previous active keyboard. For example, the second virtual keyboard 418 is adjacent to the first or active virtual keyboard 402 because their associated images, shown as 416 and 414, respectively, are displayed on adjacent surfaces of the graphical prism 412. The change of the keyboard at 318 is shown in FIG. 4C. An animation of the active virtual keyboard 414 receding into Z space, or appearing to move away from the front surface of the display 118, and an image of a second virtual keyboard 416 advancing in Z space, or appearing to move toward the front surface of the display 118, as shown in FIG. 4B, may be displayed to simulate an effect of rotation of the graphical prism 412.

Utilizing the method described, a user's hands and thumbs may be maintained in typing position relative to the portable electronic device 100 while changing the virtual keyboard to a different language (e.g., from English to Greek). Typing is not disrupted and a pop-up dialog of options or a menu is not utilized. A further touch, such as a two-thumb swipe down, may change the virtual keyboard from the Greek keyboard back to the English keyboard. Frequent switching between keyboards is facilitated utilizing only a single gesture to change keyboards. In the above example, one gesture is utilized to switch to the Greek language keyboard, and one gesture is utilized to switch back to the English language keyboard.

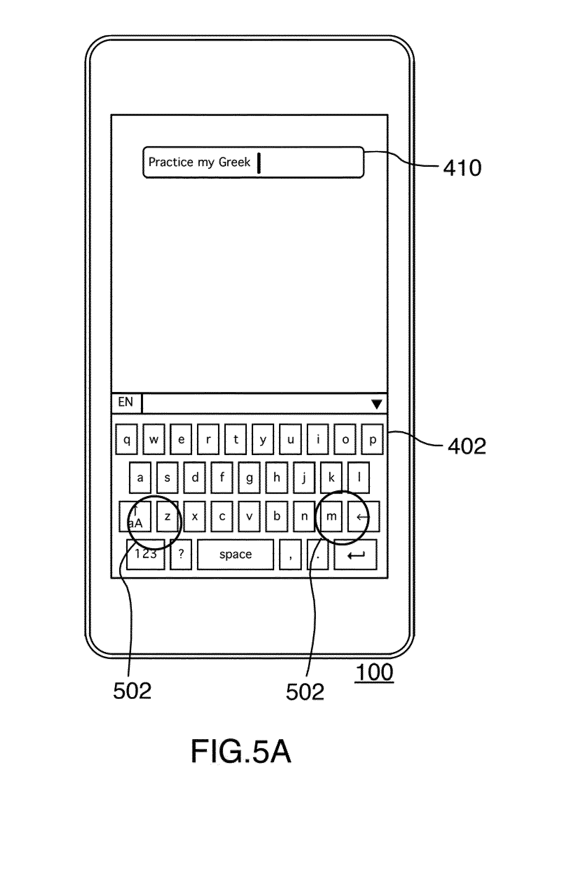

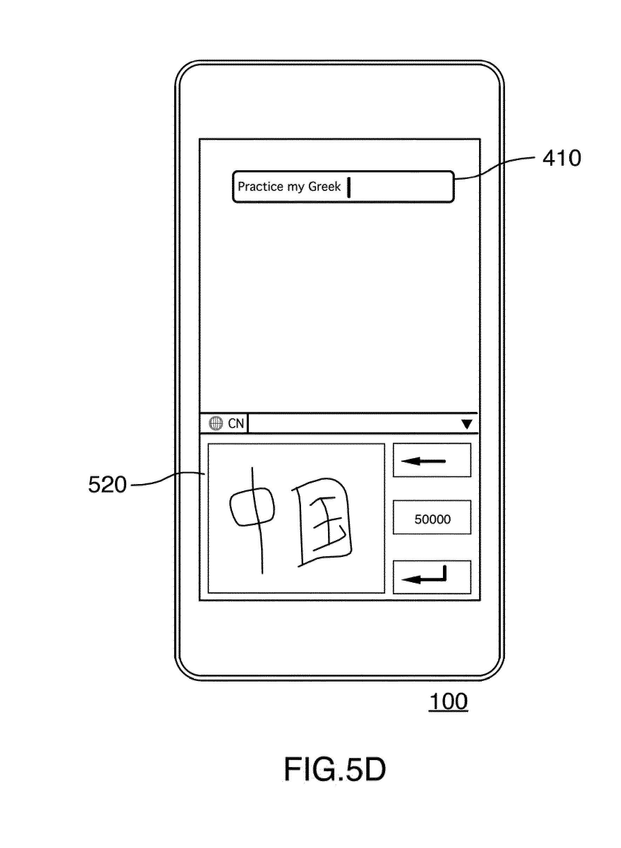

Turning to the front view of FIG. 5A, an active virtual keyboard 402 (English language) is displayed on the touch-sensitive display 118 at 302. The active virtual keyboard 402 is used to enter text into the entry field 410. A first touch, in this example, a two-finger hover, as illustrated by the circles 502, is detected at 304. The associated function is identified at 308. The associated function is a keyboard changing function at 308 and images in preview are displayed at 314.

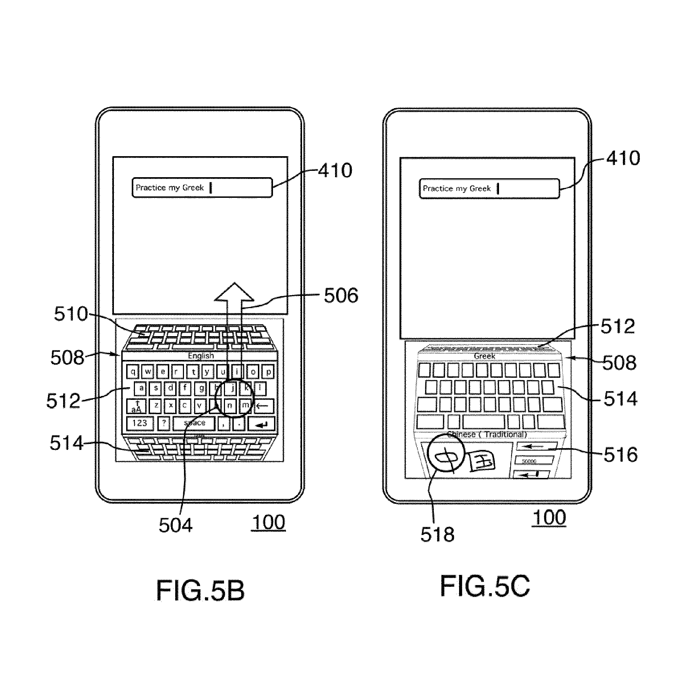

The images in preview are shown in FIG. 5B. The images in preview are displayed on virtual surfaces of a graphical prism 508 at 314.

In the example of FIG. 5B, an image of an English language virtual keyboard is previewed on the virtual surface 512, an image of a Greek language virtual keyboard is previewed on the virtual surface 514, and an image of an Arabic language virtual keyboard is previewed on the virtual surface 510 of the graphical prism 508, to facilitate user selection and changing of the virtual keyboard. The graphical prism 508 is changed in response to a gesture such as a swipe. The attributes of the swipe such as the direction of the swipe and the velocity of the swipe may be used to rotate, or display additional virtual surfaces of the graphical prism 508. For example, a fast swipe may cause the graphical prism 508 to be rotated more quickly than a slower swipe. Further, a swipe upward may cause the graphical prism 508 to be rotated in a direction upward. The display of the graphical prism 508 may be animated to show the image of the active virtual keyboard 508 receding into Z space, or appearing to move away from the front surface of the display 118, to simulate a three-dimensional perspective. For example, as shown in FIG. 5C, a gesture such as a swipe upwardly, as illustrated by the circle 504 and arrow 506, may cause the surface 510 to be rotated out of view, and may cause an image of a Chinese language virtual keyboard to be previewed on surface 516 of the graphical prism 508.

Selection of a second virtual keyboard is detected at 316. In this example, a touch at a location associated with one of the surfaces 510, 512, 514, or 516 may be detected, and the virtual keyboard associated with the surface at which the touch is detected, may be selected. In the example of FIG. 5C, a touch at a location associated with the surface 516, as illustrated by the circle 518, is detected and the virtual keyboard 520 that includes a gesture pad for Chinese character input is selected, thereby changing the active virtual keyboard 402 to the second virtual keyboard 520. Selection of the second virtual keyboard may be animated to show the image of the second virtual keyboard 520 advancing into Z space, or appearing to move toward the front surface of the display 118, to simulate a three-dimensional perspective. This method provides visual preview of one or more alternative virtual keyboards prior to receipt of selection of a second virtual keyboard. Use of images that provide a preview of a virtual keyboard provide convenient information for selection of a keyboard.

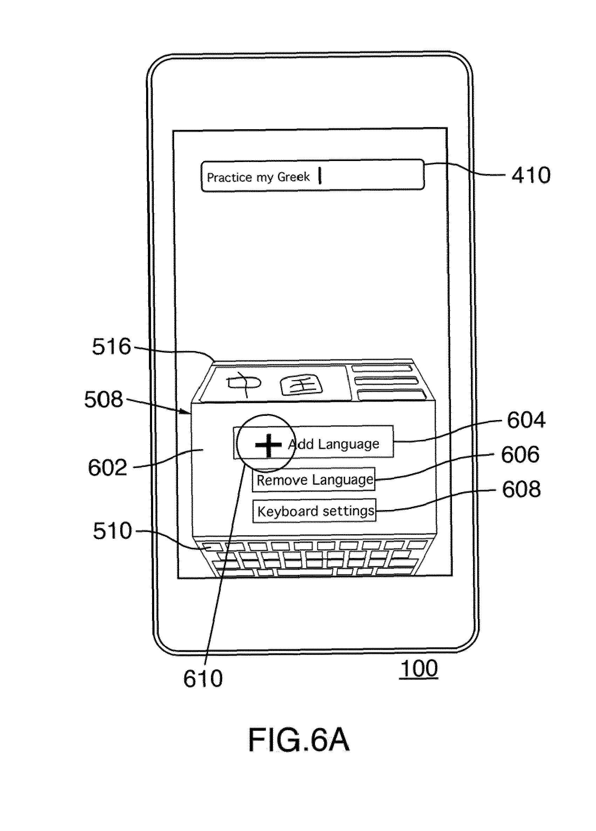

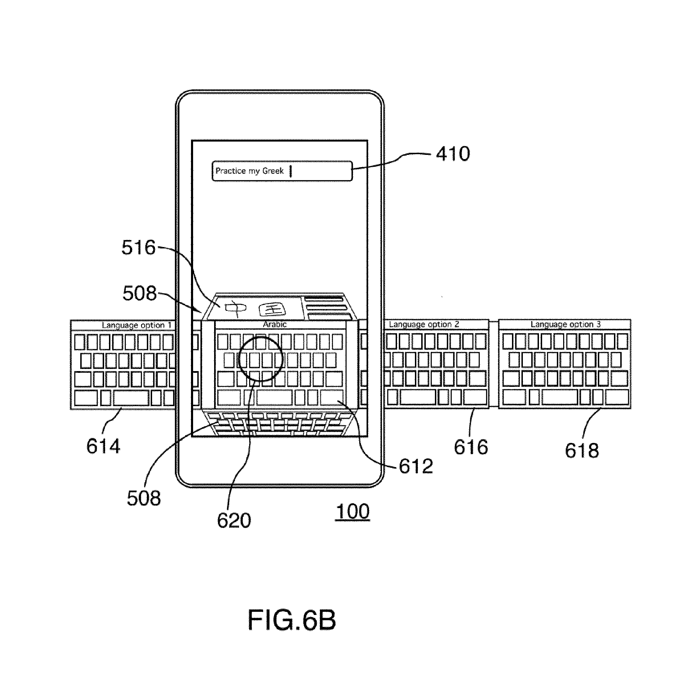

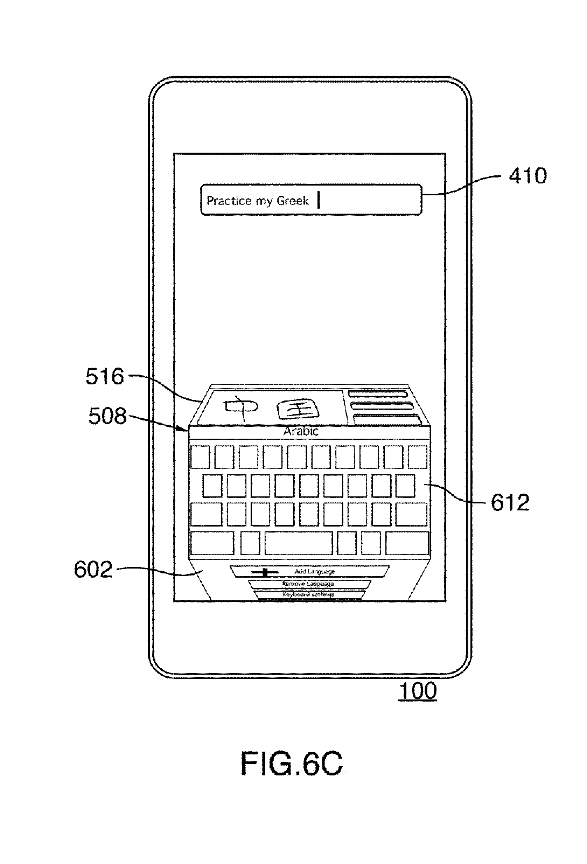

With reference to the front view of FIG. 6A, one of the surfaces of the graphical carousel, such as the graphical prism 508, may include selectable features to add or to remove virtual keyboards from the set of available virtual keyboards. In this example, the surface includes virtual buttons including an add language button 604, a remove language button 606, and a keyboard settings button 608. When a touch is detected at a location associated with the add a language button 604, as illustrated by the circle 610, a graphical carousel may be displayed, such as a graphical horizontal band to facilitate selection of an additional virtual keyboard or keyboards. For example, as shown in FIG. 6B and FIG. 6C, selection of a virtual keyboard corresponding to the image 612, as illustrated by the circle 620, causes the image 612 to be added to the graphical prism 508 such that the keyboard is available for selection, facilitating management of virtual keyboards. The keyboard settings button 608 may provide, for example, a menu of options such as an option to automatically capitalize characters, vibrate the electronic device 100 when a virtual key is selected, auto correct words or terms, and so forth.

The electronic device may track usage and may utilize the usage statistics or metrics to adjust the images that are available for selection or to re-order the images. For example, images of virtual keyboards associated with less frequently used virtual keyboards including un-used virtual keyboards may be removed. Furthermore, the images may be ordered based on a frequency of use of the virtual keyboards, so that, for example, frequently used virtual keyboards are adjacent on surfaces of the graphical carousel to facilitate faster changing between virtual keyboards. For example, if the electronic device starts with ten virtual keyboards, only four of which are utilized after n number of virtual keyboard changes, the graphical carousel may be changed to include only four surfaces. When two virtual keyboards are used more frequently than others, the images associated with the frequently used virtual keyboards may be re-ordered on the graphical carousel so that these images are displayed on adjacent surfaces. Additionally, the electronic device may keep track of the virtual keyboards that are used in a particular active application or for a particular activity. The graphical carousel may be changed according to this usage such that, for example, different images of virtual keyboards are displayed or ordered depending on the active application or activity.

A method includes, on a display of an electronic device, displaying a first virtual keyboard of a set of available virtual keyboards, detecting a touch, when the touch is associated with a keyboard changing function, displaying previews of virtual keyboards of the set of available virtual keyboards, detecting selection of a second virtual keyboard of the set of available virtual keyboards, and displaying the second virtual keyboard in response to detecting the selection.

An electronic device includes a touch-sensitive display and at least one processor coupled to the touch-sensitive display and configured to display a first virtual keyboard of a set of available virtual keyboards, detect a touch, when the touch is associated with a keyboard changing function, display at least two images providing previews of virtual keyboards of the set of available virtual keyboards, detect selection of a second virtual keyboard of the set of available virtual keyboards, and display the second virtual keyboard in response to detecting the selection.

The touch may include a multi-touch, a gesture, and a hover. The touch may include a hover including two locations of touch contact. The touch may include a multi-touch gesture. The virtual keyboard may include one of keys of a character set associated with a language and a gesture pad associated with a language.

The displayed previews may be changed in response to detecting a gesture associated with the previews. The previews may be displayed on virtual surfaces of a graphical carousel, and the displayed images may be changed by simulating a movement of the graphical carousel in response to detecting a gesture associated with the graphical carousel. The movement of the graphical carousel may include one of: rotating a graphical prism of surfaces, flipping a graphical stack of surfaces, spinning a graphical cylinder of surfaces, flipping a graphical book of surfaces, and advancing a graphical band of surfaces.

The first and second virtual keyboards may be displayed in portrait orientation or in landscape orientation.

An image may be displayed, including selectable features to add or to remove keyboards from the set of available virtual keyboards. Previews of less frequently used virtual keyboards may be removed. Previews may be ordered based on a frequency of use of the virtual keyboards, or based on active application activity.

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A method comprising:
on a display of an electronic device, displaying a first virtual keyboard of a set of available virtual keyboards;
detecting a touch;
when the touch is associated with a keyboard changing function, providing previews of virtual keyboards of the set of available virtual keyboards;
detecting selection of a second virtual keyboard of the set of available virtual keyboards; and
displaying the second virtual keyboard in response to detecting the selection.

2. The method according to claim 1, wherein the touch comprises one of a multi-touch, a gesture, and a hover.

3. The method according to claim 2, wherein the touch comprises a hover including two locations of touch contact.

4. The method according to claim 2, wherein the touch comprises a multi-touch gesture.

5. The method according to any one of claims 1 to 4, wherein the virtual keyboard comprises one of keys of a character set associated with a language and a gesture pad associated with a language.

6. The method according to any one of claims 1 to 5, wherein providing previews comprises displaying images.

7. The method according to claim 6, wherein the images are changed, in response to detecting a gesture associated with the images.

8. The method according to claim 6, wherein the images are displayed on virtual surfaces of a graphical carousel, and the images are changed by simulating a movement of the graphical carousel in response to detecting a gesture associated with the graphical carousel.

9. The method according to claim 8, wherein the movement of the graphical carousel comprises one of: rotating a graphical prism of surfaces, flipping a graphical stack of surfaces, spinning a graphical cylinder of surfaces, flipping a graphical book of surfaces, and advancing a graphical band of surfaces.

10. The method according to any one of claims 1 to 9, wherein the first and second virtual keyboards are displayed in portrait orientation.

11. The method according to any one of claims 1 to 9, wherein the first and second virtual keyboards are displayed in landscape orientation.

12. The method according to any one of claims 1 to 11, wherein providing previews comprises displaying images of the virtual keyboards and an image including selectable features to add or to remove keyboards from the set of available virtual keyboards.

13. The method according to any one of claims 1 to 12, comprising providing selectable features to add or remove keyboards from the set of available virtual keyboards.

14. The method according to any one of claims 1 to 13, further comprising adjusting the plurality of images by removing less frequently used virtual keyboards from the previews.

15. The method according to any one of claims 1 to 14, further comprising ordering the previews based on a frequency of use of the virtual keyboards.

16. The method according to any one of claims 1 to 14, further comprising ordering the previews based on an active application or activity.

17. A computer-readable medium having computer-readable code executable by at least one processor of a portable electronic device to perform the method according to any one of claims 1 to 16.

18. An electronic device comprising:
a touch-sensitive display;
at least one processor coupled to the touch-sensitive display and configured to, on the touch-sensitive display, display a first virtual keyboard of a set of available virtual keyboards, detect a touch, when the touch is associated with a keyboard changing function, displaying previews of virtual keyboards of the set of available virtual keyboards, detect selection of a second virtual keyboard of the set of available virtual keyboards, and display the second virtual keyboard in response to detecting the selection.
